# EUROPEAN PATENT APPLICATION

(11) **EP 4 818 983 A1**
(43) Date of publication of application: **07.10.2026**
(21) Application number: 24895899.3
(22) Date of filing: 12.09.2024
(51) Int. Cl.: G06N 3/098

(54) **DEEP LEARNING MODEL TRAINING METHOD AND DEEP LEARNING MODEL TRAINING SYSTEM**

(30) Priority: 30.11.2023 CN 202311636365
(71) Applicant: Cloud Intelligence Assets Holding (Singapore) Private Limited, Singapore 189554 (SG)
(72) Inventor: LIN, Zheyu, Hangzhou, Zhejiang 310030 (CN); ZHAO, Hanyu, Hangzhou, Zhejiang 310030 (CN); XIAO, Wencong, Beijing 100020 (CN); LI, Yong, Beijing 100020 (CN)
(74) Representative: Barker Brettell LLP
(86) International application number: PCT/CN2024/118478
(87) International publication number: WO 2025/112801

(57) **Abstract**

Embodiments of the present disclosure provide a method for training a deep learning model and a system for training a deep learning model. The method for training a deep learning model includes: obtaining an initial deep learning model and a sample data set; and performing, according to a preset distributed training policy, distributed training on the deep learning model based on the sample data set, and storing, according to a target storage parameter, a model parameter of the deep learning model in a calculation process of an adjustment parameter of the distributed training, where the target storage parameter is determined based on model specification information of the deep learning model and the preset distributed training policy. When determining the target storage parameter based on the model specification information of the deep learning model and the preset distributed training policy, an iteration rule of distributed training is fully considered, and in the calculation process of the adjustment parameter, the model parameter of the deep learning model is stored according to the target storage parameter, thereby enabling the training of the deep learning model to have high fault tolerance while achieving high efficiency.

## Description

This application claims priority to Chinese Patent Application No. 202311636365.9, filed on November 30, 2023 and entitled "METHOD FOR TRAINING DEEP LEARNING MODEL AND SYSTEM FOR TRAINING DEEP LEARNING MODEL", which is incorporated herein by reference in its entirety.

### TECHNICAL FIELD

Embodiments of the present disclosure relate to the field of deep learning technologies, and in particular, to a method for training a deep learning model and a system for training a deep learning model.

### BACKGROUND

With the development of deep learning technologies, large-scale deep learning models represented by large language models are widely applied to tasks in different scenarios.

Currently, efficient training of deep learning models through distributed training has become a mainstream model training manner. However, in a distributed training process, training anomalies inevitably occur. The training anomalies usually cause training interruptions, and updated model parameters are not stored, resulting in a large training progress loss and insufficient stability of deep learning model training. Moreover, in the distributed training process, storing updated model parameters after each iteration increases performance overhead and reducing training efficiency.

### SUMMARY

In view of this, an embodiment of the present disclosure provides a method for training a deep learning model. One or more embodiments of the present disclosure also relate to another method for training a deep learning model, a system for training a deep learning model, an apparatus for training a deep learning model, another apparatus for training a deep learning model, a computing device, a computer-readable storage medium, and a computer program, to resolve technical defects in the related art.

According to a first aspect of the embodiments of the present disclosure, a method for training a deep learning model is provided, including:
obtaining an initial deep learning model and a sample data set;
performing, according to a preset distributed training policy, distributed training on the deep learning model based on the sample data set, and storing, according to a target storage parameter, a model parameter of the deep learning model in a calculation process of an adjustment parameter of the distributed training, where the target storage parameter is determined based on model specification information of the deep learning model and the preset distributed training policy.

According to a second aspect of the embodiments of the present disclosure, another method for training a deep learning model is provided, applied to a cloud-side device. The cloud-side device includes a plurality of distributed nodes and a storage medium. The method includes:
obtaining an initial deep learning model and a sample data set;
invoking the plurality of distributed nodes according to a preset distributed training policy, to perform distributed training on the deep learning model based on the sample data set, and storing, according to a target storage parameter, a model parameter of the deep learning model into the storage medium in a calculation process of an adjustment parameter of the distributed training, where the target storage parameter is determined based on model specification information of the deep learning model and the preset distributed training policy;
triggering, when a training anomaly of the deep learning model is recognized, the plurality of distributed nodes to stop the distributed training on the deep learning model, and determining a target model parameter currently stored in the storage medium;
obtaining the target model parameter from the storage medium when a training resumption request is received; and
invoking the plurality of distributed nodes to resume, based on the target model parameter, the distributed training on the deep learning model.

According to a third aspect of the embodiments of the present disclosure, a system for training a deep learning model is provided. The system includes a management and control unit and a plurality of distributed nodes, where the plurality of distributed nodes includes a first distributed node, and the first distributed node is any one of the plurality of distributed nodes;
the management and control unit is configured to: obtain an initial deep learning model and a sample data set, construct, according to a preset distributed training policy, a plurality of pieces of distributed data based on the deep learning model and the sample data set, and distribute the plurality of pieces of distributed data to the distributed nodes; and
the first distributed node is configured to perform distributed training on the deep learning model based on the sample data set; and store, according to a target storage parameter, a model parameter of the deep learning model in a calculation process of an adjustment parameter of the distributed training, where the target storage parameter is determined based on model specification information of the deep learning model and the preset distributed training policy.

According to a fourth aspect of the embodiments of the present disclosure, an apparatus for training a deep learning model is provided, including:
a first obtaining module, configured to obtain an initial deep learning model and a sample data set; and
a first training module, configured to: perform, according to a preset distributed training policy, distributed training on the deep learning model based on the sample data set, and store, according to a target storage parameter, a model parameter of the deep learning model in a calculation process of an adjustment parameter of the distributed training, where the target storage parameter is determined based on model specification information of the deep learning model and the preset distributed training policy.

According to a fifth aspect of the embodiments of the present disclosure, another apparatus for training a deep learning model is provided, applied in a cloud-side device. The cloud-side device includes a plurality of distributed nodes and a storage medium. The apparatus includes:
a second obtaining module, configured to obtain an initial deep learning model and a sample data set;
a second training module, configured to: invoke the plurality of distributed nodes according to a preset distributed training policy, to perform distributed training on the deep learning model based on the sample data set, and store, according to a target storage parameter, a model parameter of the deep learning model into the storage medium in a calculation process of an adjustment parameter of the distributed training, where the target storage parameter is determined based on model specification information of the deep learning model and the preset distributed training policy;
a stopping module, configured to: trigger, when a training anomaly of the deep learning model is recognized, the plurality of distributed nodes to stop the distributed training on the deep learning model, and determine a target model parameter currently stored in the storage medium;
a parameter obtaining module, configured to obtain the target model parameter from the storage medium when a training resumption request is received; and
a resuming module, configured to: invoke the plurality of distributed nodes to resume, based on the target model parameter, the distributed training on the deep learning model.

According to a sixth aspect of the embodiments of the present disclosure, a computing device is provided, including:
a memory and a processor,
where the memory is configured to store computer-executable instructions, the processor is configured to execute the computer-executable instructions which, when executed by the processor, implement steps of the foregoing method.

According to a seventh aspect of the embodiments of the present disclosure, a computer-readable storage medium is provided, having computer-executable instructions stored therein. The instructions, when executed by a processor, implements steps of the foregoing method.

According to an eighth aspect of the embodiments of the present disclosure, a computer program is provided. The computer program, when executed in a computer, causes the computer to perform steps of the foregoing method.

In the embodiment of the present disclosure, the initial deep learning model and the sample data set are obtained; and according to the preset distributed training policy, the distributed training is performed on the deep learning model based on the sample data set, and according to the target storage parameter, the model parameter of the deep learning model is stored in the calculation process of the adjustment parameter of the distributed training, where the target storage parameter is determined based on model specification information of the deep learning model and the preset distributed training policy. The target storage parameter is determined based on the model specification information of the deep learning model and the preset distributed training policy. An iteration rule of the distributed training is fully considered. In the calculation process of the adjustment parameter of the distributed training, the model parameter of the deep learning model is stored according to the target storage parameter. A model parameter storage process is overlapped with the calculation process of the adjustment parameter in the distributed training, thereby fully reducing performance overhead. The deep learning model parameter is stored in real time in a manner of near zero performance overhead, so that deep learning model training is highly efficient while having a high fault tolerance capability.

### BRIEF DESCRIPTION OF DRAWINGS

FIG. 1 is a flowchart of a method for training a deep learning model according to an embodiment of the present disclosure.
FIG. 2 is a diagram of a system architecture in a method for training a deep learning model according to an embodiment of the present disclosure.
FIG. 3 is a schematic flowchart of a method for training a deep learning model according to an embodiment of the present disclosure.
FIG. 4 is a principle diagram of a method for training a deep learning model according to an embodiment of the present disclosure.
FIG. 5 is a flowchart of another method for training a deep learning model according to an embodiment of the present disclosure.
FIG. 6 is a schematic structural diagram of a system for training a deep learning model according to an embodiment of the present disclosure.
FIG. 7 is a schematic structural diagram of an apparatus for training a deep learning model according to an embodiment of the present disclosure.
FIG. 8 is a schematic structural diagram of another apparatus for training a deep learning model according to an embodiment of the present disclosure.
FIG. 9 is a block diagram of a structure of a computing device according to an embodiment of the present disclosure.

### DESCRIPTION OF EMBODIMENTS

In the following description, many specific details are described for fully understanding the present disclosure. However, the present disclosure can be implemented in many other manners different from those described herein. A person skilled in the art may make similar extensions without departing from the connotation of the present disclosure. Therefore, the present disclosure is not limited to the specific disclosed implementations below.

The terms used in one or more embodiments of the present disclosure are merely for the purpose of illustrating specific embodiments, and are not intended to limit one or more embodiments of the present disclosure. The terms "a", "said", and "the" in a singular form used in one or more embodiments of the present disclosure and the appended claims are also intended to include a plural form, unless other meanings are clearly indicated in the context. It should be further understood that the term "and/or" used in one or more embodiments of the present disclosure means including any or all possible combinations of one or more associated listed items.

It should be understood that, although the terms "first", "second", etc. may be used in one or more embodiments of the present disclosure to describe various pieces of information, these pieces of information are not limited by the terms. The terms are only used to distinguish between the same type of information. For example, without departing from the scope of one or more embodiments of the present disclosure, the "first" may also be referred to as the "second", and similarly, the "second" may also be referred to as the "first". Depending on the context, for example, a term "if" used herein may be explained as "while ..." or "when ..." or "in response to determining".

In addition, it should be noted that user information (including, but not limited to, user equipment information, user personal information, and the like) and data (including, but not limited to, data for analysis, stored data, displayed data, and the like) involved in one or more embodiments of the present disclosure are all information and data that are authorized by a user or that are fully authorized by all parties, and the collection, use, and processing of relevant data need to comply with relevant laws, regulations, and standards of relevant countries and regions. In addition, a corresponding operation entry is provided for the user to select to authorize or reject.

In one or more embodiments of the present disclosure, a large model refers to a deep learning model with a large number of model parameters, usually including hundreds of millions, tens of billions, hundreds of billions, trillions, or even more than ten trillion model parameters. The large model, also referred to as a foundation model (Foundation Model), is pretrained on large-scale unlabeled corpora to produce a pretrained model with hundreds of millions of parameters. Such a model can adapt to a wide range of downstream tasks and has good generalization capability, for example, includes a large language model (Large Language Model, LLM for short) and a multi-modal pretraining model (multi-modal pre-training model).

During actual application, the large model may be applied to different tasks by using only a small number of samples to fine-tune the pre-trained model. The large model may be widely applied to fields such as natural language processing (Natural Language Processing, NLP for short) and computer vision, and specifically may be applied to computer vision field tasks such as visual question answering (Visual Question Answering, VQA for short), image caption (Image Caption, IC for short), and image generation, and natural language processing field tasks such as text-based sentiment classification, text abstract generation, and machine translation. Main application scenarios of the large model include a digital assistant, an intelligent robot, search, online education, office software, e-commerce, intelligent design, and the like.

Terms involved in one or more embodiments of the present disclosure are first interpreted.

Natural language processing (Natural Language Processing, NLP for short) is an important direction in the fields of computer science and artificial intelligence, and has an objective of enabling a computer to understand and use human languages to execute useful tasks. The natural language processing is mainly applied to fields such as machine translation, speech recognition, text analysis, and text question-answering.

A hyperparameter is a fixed parameter calculated in a model training process, may be understood as a policy for updating a model parameter, and is used for controlling an update process of the model parameter.

A gradient value is a relationship between a gradient in a model and a model parameter. The gradient describes a direction in which a loss function changes with the model parameter and a change rate of the loss function. The weight is a degree of impact of the model parameter on the loss function. The gradient value determines a parameter update speed of a gradient descent algorithm, and a larger gradient value leads to faster parameter update.

Grid search parameter adjustment is a common hyperparameter adjustment policy, and finds a target hyperparameter combination by traversing all possible hyperparameter combinations. Specifically, first, a hyperparameter space needs to be defined, which includes a possible value range of each hyperparameter. Then, the hyperparameter spaces are divided into a series of subspaces, and each subspace corresponds to a hyperparameter combination. Next, the hyperparameter combination in each subspace is applied to the model, and representation of the model is measured. Finally, a target hyperparameter combination is found and used as a basis for model parameter update.

Bayesian optimization is a common hyperparameter adjustment policy, and is a hyperparameter adjustment policy based on Bayes' theorem. Bayes' theorem is a theory of probability used to estimate a probability of an event, and can be used to infer a target optimization value of a hyperparameter. In Bayesian parameter adjustment, a prior distribution is first defined, which represents knowledge about the hyperparameter. Then, the prior distribution is combined with an observed experimental result, to obtain a posterior distribution. Through posterior distribution, a target optimized value of the hyperparameter can be estimated.

Batch (mini-batch): in a deep learning scenario, an entire data set is divided into several small data sets, and the small data sets are trained each time, thereby avoiding a problem of a huge calculation amount caused by that all data in a data set participates in training at a time. In addition, when gradient update is performed, the batch does not greatly differ from the entire data set in a gradient direction, thereby ensuring a training effect.

A graphics processing unit (Graphics Processing Unit, GPU for short) is a microprocessor used for graphics-related calculation. With the development of deep learning technologies, because of a parallel structure, the graphics processing unit can implement a high-efficient matrix operation, and is widely used as calculation hardware for model training.

A tensor processing unit (Tensor Processing Unit, TPU for short) is a customized chip specifically for a deep learning task, and can provide higher efficiency and performance than a GPU.

A field-programmable gate array (Field-Programmable Gate Array, FPGA for short) is a type of programmable gate array that can be programmed to perform various functions, including convolution operations in deep learning.

An application specific integrated circuit (Application Specific Integrated Circuit, ASIC for short) is an integrated circuit specifically designed for a specific application, and can provide very high performance but has relatively high costs.

A central processing unit (Central Processing Unit, CPU for short) may also be used for model training, but is usually not as efficient as a GPU and a TPU.

A deep self-attention model (Transformer model) is a deep learning architecture based on an attention (Attention) mechanism, and is used for processing sequence data, such as a natural language.

A deep self-attention model with bidirectional encoder representation (Bidirectional Encoder Representations from Transformers, BERT for short) is a special Transformer model, and trained by using a bidirectional Transformer encoder and large-scale unlabeled text data. Excellent performance of the BERT makes the BERT a standard baseline of many natural language processing tasks.

A large language model (Large Language Model, LLM for short) is a deep learning model trained on a large-scale corpus, and is used for a natural language processing task. Such models generally include a plurality of layers of neural networks. An input of the models is a text sequence, to generate a text, and an output thereof is a task result text generated by executing a particular natural language processing task on the text sequence. The pretraining means that before the particular task, the models have been trained and prelearned to process a large amount of language data. By pretraining, the models can capture more complex language and semantic rules, thereby performing well in various natural language processing tasks and reducing a large-scale data requirement on a particular task.

Distributed training is a method for training a deep learning model by using a plurality of distributed nodes, and can greatly improve a training speed and reduce calculation time.

Model parallel (Model Parallel, MP for short) is a distributed training policy, referring to splitting a model into a plurality of parts and deploying each part to a different distributed node for training. Such a method can effectively resolve a problem of excessive parameters in a model.

Data parallel (Data Parallel, DP for short) is a distributed training policy, referring to dividing an entire sample set into a plurality of sample subsets and allocating each sample subset to a different distributed node for training. Such a technology can improve training efficiency and reduce memory occupation.

Pipeline parallel (Pipeline Parallel, PP for short) is a distributed training policy, and is a distributed training policy between model parallel and data parallel. A core idea of the pipeline parallel is to decompose a large model into a plurality of layers and form the layers into one pipeline to perform forward propagation calculation and backward propagation calculation, thereby reducing video memory occupation of a single card and reducing communication overhead.

A remote direct memory access technology (Remote Direct Memory Access, RDMA for short) is a technology used for directly reading/writing in a memory between remote computers, and can greatly improve a transmission speed of data in a network.

A network adapter is a hardware device, mainly used for implementing a physical connection between a computer and a network and completing data transmission by sending and receiving a data packet.

A peripheral component interconnect express (Peripheral Component Interconnect Express, PCIe for short) is a physical connection structure between a group of nodes, usually formed by a bus, and may be configured to support data transmission between a plurality of devices.

A high-speed channel between graphics processing units is a high-speed communication channel configured to connect two or more graphics processing units, which can provide a higher bandwidth and a lower delay for data transmission between the graphics processing units.

A communication channel is a channel configured to transmit a data signal, and may be a physical channel or a logical channel. The physical channel is formed by a transmission medium and a related communication device, and is configured to transmit an actual data signal. The logical channel is a logical path implemented by using an intermediate node based on the physical channel, that is, a logical path formed between a sender and a receiver.

Currently, distributed training of a deep learning model is mainly constructing a plurality of pieces of distributed data based on a sample set or a model parameter of the deep learning model, then distributing the plurality of pieces of distributed data to different distributed nodes, and performing iterative training on any one of the distributed nodes. In any iterative training process, training of a language model is completed in a propagation calculation manner and a parameter update manner.

However, once a training anomaly occurs, for example, a hardware anomaly, a system anomaly, a network anomaly, or another unknown anomaly, when an updated model parameter is not stored, distributed training needs to be performed again. This is difficult for a deep learning model with relatively large performance overhead. Although the updated model parameter may be stored at a particular check point (for example, after a parameter is updated in each iteration process), when there is a large number of parameters in the deep learning model, training can be continued after model parameter storage is completed. For a deep learning model with specifications reaching tens or hundreds of billions, such time overhead usually reach several minutes or even a dozen minutes, which determines that the model parameter storage cannot be frequently performed. In this case, once a training anomaly occurs, distributed training is resumed, and time overhead may reach several hours. Therefore, there is an urgent need for a method for training a deep learning model that achieves high stability and high efficiency by prestoring updated model parameters with low performance overhead when a training anomaly occurs, and eliminating the need for recalculation after distributed training is resumed.

For the foregoing problem, the present disclosure provides a method for training a deep learning model, and the present disclosure also relates to another method for training a deep learning model, a system for training a deep learning model, an apparatus for training a deep learning model, another apparatus for training a deep learning model, a computing device, a computer-readable storage medium, and a computer program, which are described in detail one by one in the following embodiments.

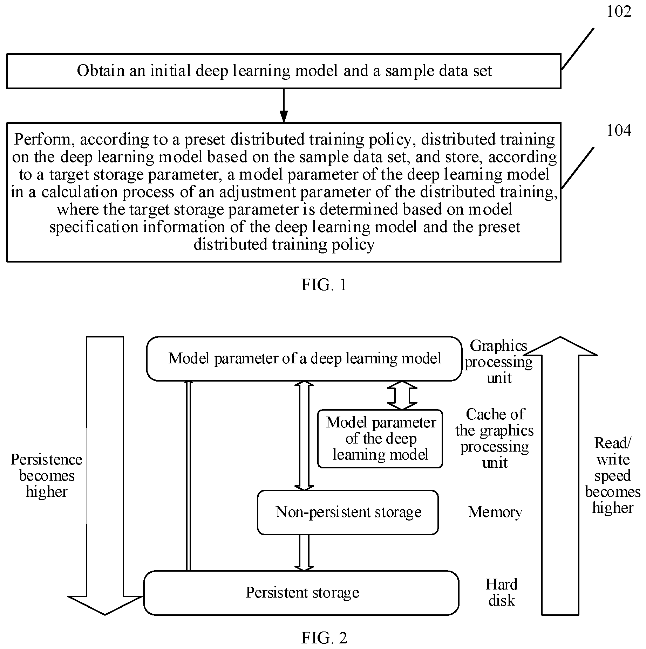

Refer to FIG. 1. FIG. 1 shows a flowchart of a method for training a deep learning model according to an embodiment of the present disclosure, including the following specific steps.

Step 102: Obtain an initial deep learning model and a sample data set.

This embodiment of the present disclosure is applied to a server end having a distributed training function. A plurality of distributed nodes and a storage medium are deployed on the server end. Any one of the distributed nodes includes computing hardware for model training, for example, a GPU, an NPU, an FPGA, an ASIC, or a CPU.

The deep learning model is a type of machine learning model based on a deep neural network structure, and is widely applied to a plurality of fields such as vision, speech, and natural language processing. The deep learning model has a large number of model parameters, and the deep learning model includes, but is not limited to, a language processing model, an image processing model, a speech processing model, a code processing model, and the like. The language processing model is used as an example for description. The language processing model may execute one or more natural language processing tasks, which include, but are not limited to, a machine translation task, a speech recognition task, a text analysis task, or a text question-answering task. In terms of functions, the language processing model may be considered as: a translation model, a speech recognition model, a text analysis model, a text question-answering model, and the like, which is not limited herein. In terms of a model structure, the language processing model may be a Transformer model, a BERT model, a large language model, and the like, which is not limited herein.

The sample data set is a set of sample data used for training the deep learning model, and the sample data set includes a large amount of sample data. The sample data set may be a labeled sample data set, or may be an unlabeled sample data set. According to different training requirements, the sample data may be data in different modalities, for example, a sample text in a text modality when the deep learning model needs to be trained into a model having a text processing function, for another example, a sample audio in an audio modality when the deep learning model needs to be trained into a model having an audio processing function, for yet another example, a sample image in an image modality when the deep learning model needs to be trained into a model having an image processing function, for yet still another example, a sample value in a value modality when the deep learning model needs to be trained into a model having a value processing function. The sample data set may be obtained from a sample database, for example, an open source sample database, or may be manually constructed, for example, generated by using a generation model, or may be obtained from a historical database, for example, a sample text set constructed by obtaining a historical query text and a historical answer text from the historical database, which is not limited herein.

For example, on a website of a large language model, a virtual character dialog function currently needs to be added. An initial large language model is trained, so that a target large language model obtained through training has a text question-answering function, and can execute a text question-answering task. The initial large language model is obtained from a model repository, and a sample text set is obtained from an open source sample database. The sample text set includes 10000000 sample question-answering text pairs.

The initial deep learning model and the sample data set are obtained. A model basis and a sample data basis are provided for subsequent distributed training.

Step 104: Perform, according to a preset distributed training policy, distributed training on the deep learning model based on the sample data set, and store, according to a target storage parameter, a model parameter of the deep learning model in a calculation process of an adjustment parameter of the distributed training, where the target storage parameter is determined based on model specification information of the deep learning model and the preset distributed training policy.

The distributed training is a training method for training the deep learning model by using a plurality of distributed nodes. The model training is iterative training, and one iteration process includes adjustment parameter calculation and model parameter update. The adjustment parameter is a hyperparameter for adjusting the model parameter, and the adjustment parameter calculation is calculation of the hyperparameter for adjusting the model parameter, which includes, but is not limited to, propagation calculation, probability calculation (performing model parameter update through Bayesian optimization), grid calculation (performing model parameter update through a grid search), and a diffusion derivation process (performing a forward diffusion process and a backward derivation process by using a diffusion model).

The distributed training policy is a policy of splitting a large-scale training task of the deep learning model into a plurality of small-scale training tasks by using a distributed computing framework and distributing the small-scale training tasks to a plurality of distributed nodes for execution, and includes, but is not limited to, a data parallel policy, a model parallel policy, and a pipeline parallel policy. The distributed training policy is preset according to a model attribute of a deep learning model, a sample data set, and/or a training task. For example, when model layers of the deep learning model are sequentially limited, and it is difficult to split training, the data parallel policy is used. For another example, when a data scale of the sample data set is excessively large, the data parallel policy is used. For another example, in a training task of large-scale text classification, using the data parallel policy may cause a network bottleneck; using the model parallel policy may cause excessively high complexity; and therefore, the pipeline parallel policy is used. Different distributed training policies correspond to different iteration features of model training. For example, when the data parallel policy is used, a sample data amount on each distributed node is small and a model parameter specification is large, so that time overhead of one adjustment parameter calculation are high and the number of times is small; and when the model parallel policy is used, a sample data amount on each distributed node is large and a model parameter specification is small, so that time overhead of one adjustment parameter calculation are low and the number of times is large. Different iteration features determine different time overhead of the adjustment parameter calculation and different storage time. The target storage parameter needs to be precisely determined, and a storage process of the model parameter is overlapped with the calculation process of the adjustment parameter in the distributed training.

The model specification information is information of a model parameter specification of the deep learning model, and includes, but is not limited to, the number of model parameters, a reference model, and the like. The number of model parameters is a parameter specification scale of model parameters. For example, the number of model parameters of the deep learning model is in tens of billions. The reference model is a particular deep learning model architecture. For another example, in natural language processing, the reference model of the deep learning model is a Transformer model, a BERT model, a large language model, and the like.

In this embodiment of the present disclosure, the storage is model parameter storage synchronously executed with the calculation process of the adjustment parameter, that is, time overhead of the storage process and time overhead of the calculation process of the adjustment parameter are not greatly different. For example, the time overhead of the calculation process of the adjustment parameter is T, and the time overhead of the storage process is T'. If T is less than T', even in a model parameter update process, storage is still performed. Once a training anomaly occurs, it is difficult to resume model training. For details, refer to the following descriptions. Using propagation calculation as an example, the storage process may be in a forward propagation calculation process, in a backward propagation calculation process, or in both a forward propagation calculation process and a backward propagation calculation process, which is not limited herein.

The target storage parameter is a configuration parameter for storing the model parameter. The target storage parameter is determined based on model specification information of the deep learning model and the preset distributed training policy, and includes, but is not limited to, a target storage model parameter specification, a target storage frequency, a target storage read/write speed, a target storage bandwidth, and the like. After the distributed training policy is determined and executed, the time overhead of the calculation process of the adjustment parameter are difficult to change. To overlap a storage process of the model parameter and the calculation process of the adjustment parameter in the distributed training, the time overhead of storing the model parameter need to be controlled by using the target storage parameter.

It should be noted that if storage of the model parameter in the model parameter update process causes an updated model parameter and a model parameter that is not updated to be mixed and then stored, once a training anomaly occurs, model training cannot be resumed by using the mixed and stored updated model parameter and model parameter that is not updated. For example, when an (i-1)^{th} iterative training is completed, a current model parameter is θᵢ₋₁, an i^{th} iterative training is performed, and in the calculation process of the adjustment parameter, the current model parameter θᵢ₋₁ is stored. After storage is completed, if a training anomaly occurs, the model parameter θᵢ₋₁ may be obtained to perform the i^{th} iterative training again. If the current model parameter θᵢ₋₁ is stored in the model parameter update process, a part of updated model parameters θᵢ is introduced. Consequently, the i^{th} iterative training cannot be performed again when the training anomaly occurs.

A specific manner of performing distributed training on the deep learning model based on the sample data set according to the preset distributed training policy is: constructing a plurality of pieces of distributed data according to the preset distributed training policy, distributing the plurality of pieces of distributed data to the distributed node, and performing iterative training. Where the iterative training includes adjustment parameter calculation and model parameter update.

A specific manner of storing the model parameter of the deep learning model according to the target storage parameter is: storing the model parameter of the deep learning model into the storage medium according to the target storage parameter. Where the storage medium is a hardware device for storing the model parameter, and includes, but is not limited to: a computing hardware cache (a GPU cache, an NPU cache, an FPGA cache, an ASIC cache, and a CPU cache), a memory, a hard disk, and a distributed persistent storage array.

A specific manner of determining the target storage parameter based on the model specification information of the deep learning model and the preset distributed training policy is: performing time overhead analysis based on the model specification information of the deep learning model and the preset distributed training policy, to obtain the target storage parameter. Where the time overhead analysis is an operation of obtaining time overhead of the calculation process of the adjustment parameter and the model parameter storage process in the iterative training through analysis, to determine the target storage parameter that can implement storage.

For example, the preset distributed training policy is the data parallel policy. Time overhead analysis is performed in advance based on the number of model parameters of the large language model being at a level of 10¹³ and the data parallel policy, to determine time overhead t1 of a forward propagation calculation process and time overhead t2 of a backward propagation calculation process of one iteration, and target storage model parameter specifications P1 and P2 are obtained based on the time overhead and the number of model parameters. The 10000000 sample question-answering text pairs in the sample text set are divided according to the data parallel policy. 64 pieces of distributed data are constructed, the 64 pieces of distributed data are distributed to 64 distributed nodes, a GPU is deployed on each distributed node, any piece of distributed data is divided into 16 mini-batches on any one of the distributed nodes, and iterative training is performed on the 16 mini-batches by using the GPU. In a forward propagation calculation process and a backward propagation calculation process of each iterative training, according to the target storage model parameter specifications P1 and P2, a model parameter θ of the large language model is sequentially stored in a GPU cache, a memory, and a hard disk of the distributed node. According to the foregoing policy, after the distributed training is completed, a target large language model having a text question-answering function is obtained, and the target large language model is deployed on a cloud-side device of the website of the large language model, to provide the virtual character dialog function for a user.

In the embodiment of the present disclosure, the initial deep learning model and the sample data set are obtained; and according to the preset distributed training policy, the distributed training is performed on the deep learning model based on the sample data set, and according to the target storage parameter, the model parameter of the deep learning model is stored in the calculation process of the adjustment parameter of the distributed training, where the target storage parameter is determined based on model specification information of the deep learning model and the preset distributed training policy. The target storage parameter is determined based on the model specification information of the deep learning model and the preset distributed training policy. An iteration rule of the distributed training is fully considered. In the calculation process of the adjustment parameter of the distributed training, the model parameter of the deep learning model is stored according to the target storage parameter. A model parameter storage process is overlapped with the calculation process of the adjustment parameter in the distributed training, thereby fully reducing performance overhead. The deep learning model parameter is stored in real time in a manner of near zero performance overhead, so that deep learning model training is highly efficient while having a high fault tolerance capability.

In an optional embodiment of the present disclosure, the performing, according to the preset distributed training policy, the distributed training on the deep learning model based on the sample data set in step 104 includes the following specific steps:
constructing, according to the preset distributed training policy, a plurality of pieces of distributed data based on the deep learning model and the sample data set, where the preset distributed training policy includes a model parallel training policy or a data parallel training policy;
distributing the plurality of pieces of distributed data to distributed nodes;
performing, on a first distributed node, propagation calculation based on the distributed data, to obtain the gradient value, where the first distributed node is any one of a plurality of distributed nodes; and
updating the model parameter of the deep learning model based on the gradient values on the distributed nodes, and obtaining a trained deep learning model when a preset training ending condition is satisfied.

Distributed data is partial data distributed to the distributed node for execution. If entire model training is understood as a large-scale training task, the distributed data is task data of small-scale training tasks obtained by dividing the large-scale training task. Different distributed training strategies are used, and different distributed data are constructed. For example, the model parallel policy is used, and the model parameter of the deep learning model is divided into plural parts, to construct the distributed data. For another example, the data parallel policy is used, and the sample data set is divided into plural parts, to construct the distributed data.

The propagation calculation is a process of determining a gradient value based on sample data by using the deep learning model, and includes a forward propagation calculation process and a backward propagation calculation process. The forward propagation calculation is a process in which the sample data is input into the deep learning model, and predicted data is output. The backward propagation calculation is a process in which after a loss value is determined by using the predicted data, the loss value is inversely input to the deep learning model, and a gradient value of each model layer is determined. The model parameter update is a process of adjusting a model parameter of each model layer of the model based on the gradient value. For example, in the forward propagation calculation process, sample data X is input to the large language model, to output prediction data Z. In the backward propagation calculation process, a loss value is determined based on the prediction data Z, and is inversely input to the large language model, to determine gradient values $\frac{dL}{dX}$ of n model layers of the large language model is: ${\left(\frac{dL}{dX}\right)}_{1} , {\left(\frac{dL}{dX}\right)}_{2} , …$, and ${\left(\frac{dL}{dX}\right)}_{n}$. In the model parameter update process, based on the gradient value $\frac{dL}{dX}$, model parameters of the n model layers in the large language model are adjusted.

The gradient value is obtained by assigning different gradient values to model parameter update of each model layer in the backward propagation calculation propagation process, thereby controlling an update amplitude of the parameter of each model layer and a parameter update linear speed of the model. A larger parameter update value for each model layer indicates a faster parameter update, and vice versa.

The preset training ending condition is a preset determining condition for stopping training, and includes, but is not limited to: a preset number of iterations, a preset loss value threshold, preset training time, and a preset model convergence condition.

A specific manner of constructing, according to the preset distributed training policy, a plurality of pieces of distributed data based on the deep learning model and the sample data set is: dividing the model parameter of the deep learning model and/or the sample data set according to the preset distributed training policy, to obtain the plurality of pieces of distributed data.

A specific manner of performing propagation calculation based on the distributed data to obtain the gradient value is: inputting the sample data in the distributed data to the deep learning model, and performing forward propagation calculation to obtain predicted data, determining a loss value based on the sample data and the predicted data, inversely inputting the loss value to the deep learning model, and performing backward propagation calculation, to obtain the gradient value.

A specific manner of updating the model parameter of the deep learning model based on the gradient value of each distributed node is: updating the model parameter of the deep learning model based on the gradient value of each distributed node by using a gradient update method.

For example, the 10000000 sample question-answering text pairs in the sample text set are divided according to the data parallel policy, to obtain 64 pieces of distributed data. The 64 pieces of distributed data are distributed to 64 distributed nodes, the GPU is deployed on each distributed node, and any distributed data is divided into 16 mini-batches on any one of the distributed nodes. In any iterative training process, a sample question text X in a mini-batch of distributed data is input into the large language model, and forward propagation calculation is performed, to obtain a predicted answer text Z^{'}. A loss value Loss is determined based on a sample answer text Z and the predicted answer text, the loss value is inversely input into the large language model, and backward propagation calculation is performed, to obtain a gradient value $\frac{dL}{dX}$. A model parameter θ of the large language model is updated by using the gradient update method based on a gradient value of each distributed node. When training of all mini-batches of distributed data is completed, a trained target large language model is obtained, and the target large language model has the text question-answering function.

According to the preset distributed training policy, a plurality of pieces of distributed data are constructed based on the deep learning model and the sample data set, where the preset distributed training policy includes a model parallel training policy or a data parallel training policy; the plurality of pieces of distributed data are distributed to distributed nodes; on a first distributed node, propagation calculation is performed based on the distributed data, to obtain the gradient value, where the first distributed node is any one of a plurality of distributed nodes; and a model parameter of the deep learning model is updated based on gradient values on the distributed nodes, and the trained deep learning model is obtained when a preset training ending condition is satisfied. The plurality of pieces of distributed data are constructed according to the preset distributed training policy, and distributed training is performed on the plurality of distributed nodes to obtain the gradient value, thereby completing update of the model parameter of the deep learning model, and improving model training efficiency.

In an optional embodiment of the present disclosure, the distributed data includes a plurality of batches of distributed data; and
the performing, on a first distributed node, the propagation calculation based on the distributed data, to obtain the gradient value includes the following specific step:
performing, on the first distributed node, propagation calculation based on a current batch of distributed data, to obtain the gradient value.

Correspondingly, after updating the model parameter of the deep learning model based on the gradient values on the distributed nodes, the following specific step is further included:
updating the current batch of distributed data, and re-executing the step of performing, on the first distributed node, propagation calculation based on a current batch of distributed data, to obtain the gradient value.

The current batch of distributed data is a batch of distributed data used for training the deep learning model in a current iterative training process. For example, distributed data is divided into 16 batches on any one of the distributed nodes, and iterative training needs to be performed 16 times. One iterative training process includes a forward propagation calculation process, a backward propagation calculation process, and a parameter update process. Optionally, before the parameter update process, a communication process (a gradient value integration process) is further included. Currently, the process is the i^{th} iterative training process, the current batch of distributed data is an i^{th} batch of distributed data, and the current model parameter is the updated model parameter θᵢ₋₁ obtained after an (i-1)^{th} update. Correspondingly, updating the current batch of distributed data is updating the i^{th} batch of distributed data to an (i+1)^{th} batch of distributed data.

A specific manner of performing the propagation calculation based on the current batch of distributed data to obtain the gradient value is: inputting the sample data in the current batch of distributed data to the deep learning model, and performing the forward propagation calculation to obtain predicted data, determining a loss value based on the sample data and the predicted data, inversely inputting the loss value to the deep learning model, and performing backward propagation calculation, to obtain the gradient value.

For example, a sample question text Xᵢ in an i^{th} batch of distributed data input to the large language model (a current model parameter is the model parameter θᵢ₋₁ obtained after an (i-1)^{th} update), and forward propagation calculation is performed, to obtain predicted data, namely, a predicted answer text ${Z}_{i}^{′}$. Based on a sample answer text Zᵢ and the predicted answer text, the loss value Loss is determined. The loss value is inversely input to the large language model, and backward propagation calculation is performed, to obtain the gradient value $\frac{dL}{dX}$. Based on gradient value on the distributed nodes, by using the gradient update method, the model parameter of the large language model is updated from θᵢ₋₁ to θᵢ, and the current batch of distributed data is updated from the i^{th} batch to (i+1)^{th} batch. The step of inputting a text question text Xᵢ₊₁ in the (i+1)^{th} batch of distributed data to the large language model continues to be performed... When training of all mini-batches of distributed data is completed, a trained target large language model is obtained, and the target large language model has the text question-answering function.

On the first distributed node, propagation calculation is performed based on a current batch of distributed data, to obtain the gradient value; and the current batch of distributed data is updated, and the step of performing, on the first distributed node, propagation calculation based on a current batch of distributed data, to obtain the gradient value is re-executed. The distributed data is divided into a plurality of batches, and iterative training is performed on the deep learning model by using the plurality of batches of distributed data, thereby avoiding a training bottleneck caused by a huge calculation amount due to that all the distributed data participates the distributed training at a time, and ensuring a training effect.

In an optional embodiment of the present disclosure, before performing, on the first distributed node, the propagation calculation based on the current batch of distributed data, to obtain the gradient value, the following specific steps are further included:
predicting, for the batches of distributed data, the number of times and time overhead of the propagation calculation based on the model specification information of the deep learning model and the preset distributed training policy; and
determining the target storage parameter corresponding to the propagation calculation process based on the number of times and the time overhead of the propagation calculation.

In this embodiment of the present disclosure, in a deep learning model training process under different distributed training policies, the number of times of forward calculation and back calculation required by each batch of distributed data and corresponding time overhead are also different. For example, when the data parallel policy is used, a sample data amount on each distributed node is small and a model parameter specification is large, so that time overhead of once propagation calculation are high, and the number of times is small. When the model parallel policy is used, a sample data amount on each distributed node is large and a model parameter specification is small, so that time overhead of once propagation calculation are low and the number of times is large. The target storage parameter needs to be determined in a refined manner based on the number of times and the time overhead of the propagation calculation, and the storage process of the model parameter in each iterative training process is overlapped with the propagation calculation process in distributed training.

For the batches of distributed data, the number of times and the time overhead of the propagation calculation are predicted based on the model specification information of the deep learning model and the preset distributed training policy, and are specifically obtained through prediction by using a prediction algorithm, for example, a torch.distributed module, a torch.profiler tool, and a tf.data API interface.

A specific manner of determining the target storage parameter corresponding to the propagation calculation process based on the number of times and the time overhead of the propagation calculation is: by using that the time overhead of the model parameter storage process do not exceed the time overhead of the propagation calculation process as a target, determining the target storage parameter corresponding to the propagation calculation process based on the number of times and the time overhead of the propagation calculation.

For example, by using the torch.distributed module, for the batches of distributed data, it is predicted, based on that the number of model parameters of the large language model is at a level of 10¹³ and the data parallel policy, that the number of times of the propagation calculation is 16, the time overhead of the forward propagation calculation process is t1, and the time overhead of the backward propagation calculation process is t2. By using the time overhead T' of the model parameter storage process not exceeding the time overhead T=16*(t1+t2) of the propagation calculation as a target, it is determined that the target storage model parameter specifications corresponding to the propagation calculation processes are P1 and P2.

For the batches of distributed data, the number of times and time overhead of the propagation calculation are predicted based on the model specification information of the deep learning model and the preset distributed training policy; and the target storage parameter corresponding to the propagation calculation process is determined based on the number of times and the time overhead of the propagation calculation. This ensures feasibility of subsequently storing the model parameter, and more accurately overlaps the model parameter storage process with the propagation calculation process in the distributed training.

In an optional embodiment of the present disclosure, before updating the model parameter of the deep learning model based on the gradient values on the distributed nodes, the following specific step is further included:
integrating the gradient values on the distributed nodes through communication channels between the distributed nodes.

The communication channel between the distributed nodes is a channel connection for data transmission between the distributed nodes, and may be a physical connection, for example, a network adapter, a PCIe topology, or an optical fiber, or may be a virtual connection, for example, a high-speed channel between GPUs or a high-speed channel between the distributed nodes. The communication channel may be implemented by using an RDMA technology, thereby improving a transmission speed.

For example, the gradient value $\frac{dL}{dX}$ on the distributed node is integrated by using the RDMA technology through the high-speed channel constructed by the network adapters on the 64 distributed nodes. The model parameter θ of the large language model is updated by using the gradient update method based on the gradient value of the distributed nodes.

The gradient values on the distributed nodes are integrated through communication channels between the distributed nodes. Through the communication channel, a communication process of the iterative training is intensively completed, thereby improving efficiency and stability of model training.

In an optional embodiment of the present disclosure, any one of the distributed nodes includes a first communication channel connected to a storage medium and a second communication channel connected to another distributed node; and
the storing, according to the target storage parameter, the model parameter of the deep learning model in step 104 includes the following specific step:
storing the model parameter of the deep learning model into the storage medium through the first communication channel according to the target storage parameter.

Correspondingly, the integrating the gradient values on the distributed nodes through communication channels between the distributed nodes includes the following specific step:
integrating the gradient values on the distributed nodes through the second communication channels.

In this embodiment of the present disclosure, the storage medium is independent of the distributed node, to avoid a data loss caused by an anomaly on any one of the distributed nodes. This ensures reliability of an entire distributed system. Therefore, the communication channel needs to be established between the distributed node and the storage medium, to store data. However, resource performance of the distributed node is limited, the communication channel is required in the model parameter storage process; and the communication channel is also required in the communication process, that is, in integration of the gradient values on the distributed nodes. This is difficult to be implemented for a large-scale deep learning model. Therefore, communication channels in two processes need to be distinguished, to separate the two data transmission processes. This avoids introduction of additional collective communication and ensures that distributed training is not interfered with.

The first communication channel connected to the storage medium is a communication channel used in the model parameter storage process, and includes a physical connection and a virtual connection between the distributed node and the storage medium, for example, a read/write channel (a data bus) between a network adapter, a PCIe topology, an optical fiber, a distributed node, and a storage medium.

The second communication channel connected to another distributed node is a communication channel used in the communication process, and includes a physical connection and a virtual connection between the distributed node and the storage medium, for example, a high-speed channel between a network adapter, a PCIe topology, an optical fiber, a distributed node, and a GPU, or a high-speed channel between distributed nodes. The second communication channel may be implemented by using the RDMA technology, thereby improving a transmission speed.

For example, the first communication channel is a physical connection between the network adapters on the 64 distributed nodes and a distributed persistent storage array respectively. According to the target storage model parameter specifications P1 and P2, the model parameter θ of the large language model is stored in the distributed persistent storage array through the first communication channel. The second communication channel is a physical connection between the network adapters on the 64 distributed nodes, and a virtual connection between a PCIe topology on the distributed nodes into which a GPU is inserted, a high-speed channel between GPUs, and a high-speed channel between distributed nodes. The gradient values $\frac{dL}{dX}$ on the distributed nodes are integrated by using the RDMA technology through the second communication channels, and the model parameter θ of the large language model is updated by using the gradient update method based on the gradient values of the distributed node.

The model parameter of the deep learning model is stored into the storage medium through the first communication channel according to the target storage parameter. The gradient values on the distributed nodes are integrated through the second communication channels. The two data transmission processes, that is, the model parameter storage process and the communication process, are separated, to avoid introducing additional collective communication, and ensure that the distributed training is not interfered with. This improves reliability of the distributed training and improves the effect of model training.

In an optional embodiment of the present disclosure, the propagation calculation includes forward propagation calculation and backward propagation calculation.

In step 104, before storing, according to a target storage parameter, a model parameter of the deep learning model in the propagation calculation process of the distributed training, the following specific step is further included:
determining a first target storage parameter corresponding to a forward propagation calculation process and a second target storage parameter corresponding to a backward propagation calculation process based on the model specification information of the deep learning model and the preset distributed training policy.

Correspondingly, in step 104, the storing, according to a target storage parameter, the model parameter of the deep learning model in the propagation calculation process of the distributed training specifically includes the following specific steps:
storing, according to the first target storage parameter, the model parameter of the deep learning model in the forward propagation calculation process; and
storing, according to the second target storage parameter, the model parameter of the deep learning model in the backward propagation calculation process.

The propagation calculation process includes the forward propagation calculation process and the backward propagation calculation process. Time overhead required by the two processes are different. Therefore, it is necessary to refine the distinction between the two processes and determine the target storage parameter in the forward propagation calculation process and the target storage parameter in the backward propagation calculation process.

The first target storage parameter is a configuration parameter for storing the model parameter in the forward propagation calculation process. The first target storage parameter is determined based on model specification information of the deep learning model and the preset distributed training policy, and includes, but is not limited to, a first target storage model parameter specification, a first target storage frequency, a first target storage read/write speed, a first target storage bandwidth, and the like.

The second target storage parameter is a configuration parameter for storing the model parameter in the backward propagation calculation process. The second target storage parameter is determined based on model specification information of the deep learning model and the preset distributed training policy, and includes, but is not limited to, a second target storage model parameter specification, a second target storage frequency, a second target storage read/write speed, a second target storage bandwidth, and the like.

A specific manner of determining a first target storage parameter corresponding to a forward propagation calculation process and a second target storage parameter corresponding to a backward propagation calculation process based on the model specification information of the deep learning model and the preset distributed training policy is: for the batches of distributed data, predicting the number of times and time overhead of the forward propagation calculation and the backward propagation calculation based on the model specification information of the deep learning model and the preset distributed training policy, and determining, based on the number of times and the time overhead of the forward propagation calculation and the backward propagation calculation, the first target storage parameter corresponding to the forward propagation calculation and the second target storage parameter corresponding to the backward propagation calculation process.

A specific manner of the storing, according to the first target storage parameter, the model parameter of the deep learning model in the forward propagation calculation process is: storing, according to the first target storage parameter, the model parameter of the deep learning model into the storage medium in the forward propagation calculation process.

A specific manner of the storing, according to the second target storage parameter, the model parameter of the deep learning model in the backward propagation calculation process is: storing, according to the second target storage parameter, the model parameter of the deep learning model into the storage medium in the backward propagation calculation process.

For example, through a multi-process parallel communication module, for the batches of distributed data, based on the number of model parameters of the large language model at a level of 10¹³ and the data parallel policy, it is predicted that the number of times of the forward propagation calculation is 16 and the time overhead of the forward propagation calculation is t1, and the number of times of the backward propagation calculation is 16 and the time overhead of the backward propagation calculation is t2. By using the time overhead T' of the model parameter storage process not exceeding the time overhead T=16*(t1+t2) of the propagation calculation process as the target, it is determined that a first target storage model parameter specification corresponding to the forward propagation calculation process is P1 and a second target storage model parameter specification corresponding to the backward propagation calculation process is P2. In the forward propagation calculation process, according to the first target storage model parameter specification, the model parameter θ of the large language model is stored in the GPU cache, the memory, and the distributed persistent storage array of the distributed node. In the backward propagation calculation process, according to the second target storage model parameter specification, the model parameter θ of the large language model is stored in the GPU cache, the memory, and the distributed persistent storage array of the distributed node.

The first target storage parameter corresponding to the forward propagation calculation process and the second target storage parameter corresponding to the backward propagation calculation process are determined based on the model specification information of the deep learning model and the preset distributed training policy; the model parameter of the deep learning model is stored according to the first target storage parameter in the forward propagation calculation process; and the model parameter of the deep learning model is stored according to the second target storage parameter in the backward propagation calculation process. The target storage parameters corresponding to the forward propagation and the backward propagation are divided more finely, and the model parameter storage process are overlapped with the forward propagation calculation process and the backward propagation calculation process in the distributed training. The deep learning model parameter is stored in real time in a manner of near zero performance overhead, so that deep learning model training is highly efficient while having a high fault tolerance capability.

In an optional embodiment of the present disclosure, the storing, according to a target storage parameter, a model parameter of the deep learning model in step 104 includes the following specific step:
storing the model parameter of the deep learning model into the plurality of storage media according to the target storage parameter and storage performance priorities of the plurality of storage media.

Different storage media have different storage performance, which includes, but is not limited to: a read/write speed and persistence. For example, a read/write speed of a memory is higher than a read/write speed of a hard disk, but persistence of the memory is lower than persistence of the hard disk, and compared with the hard disk, the memory has a lower anomaly tolerance capability.

A specific manner of storing the model parameter of the deep learning model into a plurality of storage media according to the target storage parameter and storage performance priorities of the plurality of storage media is: determining a storage policy according to the target storage parameter and the storage performance priorities of the plurality of storage media, and storing the model parameter of the deep learning model into the plurality of storage media according to the storage policy. This embodiment of the present disclosure provides a storage policy: establishing a storage medium hierarchy: a GPU cache, a memory, and a hard disk from top to bottom, 1. a storage medium at a higher layer and has a faster read/write speed is used as much as possible, to maximize a parameter specification scale of a saved model parameter and an anomaly recovery capability; 2. it can still be ensured, even if an upper-layer storage medium is not available, that a current model parameter is persistently stored by depending on a lower-layer, more persistent storage medium; and 3. overhead is reduced through asynchronous execution between upper and lower layers.

Optionally, the storing, according to the target storage parameter, the model parameter of the deep learning model into a multi-layer storage medium includes the following specific step: separately storing the model parameter of the deep learning model into a first storage medium and a second storage medium according to the target storage parameter, where a read/write speed of the first storage medium is faster than a read/write speed of the second storage medium.

For example, according to the target storage model parameter specifications P1 and P2, the model parameter θ of the large language model is separately stored in the GPU cache, the memory, and the hard disk of the distributed node.

Optionally, the storing, according to the target storage parameter, the model parameter of the deep learning model into a multi-layer storage medium includes the following specific step: storing the model parameter of the deep learning model into the first storage medium according to the target storage parameter, to transfer the model parameter from the first storage medium to the second storage medium, where the read/write speed of the first storage medium is faster than the read/write speed of the second storage medium.

For example, according to the target storage model parameter specifications P1 and P2, the model parameter θ of the large language model is stored in the GPU cache, to transfer the model parameter from the GPU cache to the memory and transfer the model parameter from the memory to the hard disk.

The model parameter of the deep learning model is stored into the plurality of storage media according to the target storage parameter and the storage performance priorities of the plurality of storage media. Storage performance of different storage media is fully utilized, so that high-frequency model parameter storage is implemented, and a current model parameter is stored, thereby reducing overhead.

In an optional embodiment of the present disclosure, the method further includes the following steps:
obtaining a stored target model parameter when a training resumption request is received, where the training resumption request is generated after a training anomaly of the distributed training is determined to be recovered, and the target model parameter is a model parameter stored before the training anomaly occurs; and
resuming distributed training on the deep learning model based on the target model parameter.

The training anomaly is an anomaly that occurs in a model training process. The model training may not be performed normally due to the anomaly, or performance and accuracy of a model obtained through training may be affected. The anomaly includes, but is not limited to, a hardware anomaly, a system anomaly, a network anomaly, or other unknown anomalies. Training anomaly recovery means resuming model training by using corresponding measures when a training anomaly occurs. The training resumption request is an instruction request used for resuming model training.

The target model parameter is a model parameter stored before the training anomaly occurs. For example, when an (i-1)^{th} iterative training is completed, a target model parameter is θᵢ₋₁, an i^{th} iterative training is performed, and in the propagation calculation process, the target model parameter θᵢ₋₁ is stored. After storage is completed, if a training anomaly occurs, the model parameter θᵢ₋₁ may be obtained to perform the i^{th} iterative training again.

A specific manner of the obtaining the stored target model parameter is: obtaining the stored target model parameter from the storage medium.

For example, when a training resumption request is received, the stored target model parameter θ is obtained from the hard disk. Based on the target model parameter θ, distributed training on the large language model is resumed, to obtain a trained target large language model. The target large language model has a text question-answering function.

A stored target model parameter is obtained when a training resumption request is received, where the training resumption request is generated after a training anomaly of the distributed training is determined to be recovered, and the target model parameter is a model parameter stored before the training anomaly occurs; and distributed training on the deep learning model is resumed based on the target model parameter. Fault tolerance of deep learning model training is improved, re-training the deep learning model is avoided, training efficiency is ensured while there is stability, and training costs is reduced.

FIG. 2 shows a diagram of a system architecture in a method for training a deep learning model according to an embodiment of the present disclosure. As shown in FIG. 2,
the system architecture includes a plurality of layers of storage media, which are sequentially, from top to bottom, a cache, a memory, and a hard disk of a graphics processing unit. Persistence of the plurality of layers of storage media becomes higher from top to bottom, and a read/write speed of the plurality of layers of storage media becomes faster from bottom to top. In the distributed training process, the model parameter of the deep learning model is stored from the graphics processing unit into the cache of the graphics processing unit, to perform non-persistent high-speed reading/writing. The model parameter of the deep learning model is stored from the graphics processing unit into the memory, to perform non-persistent high-speed reading/writing. The model parameter of the deep learning model is transferred to the hard disk by using the memory, for persistent storage. When training needs to be resumed, the model parameter of the deep learning model is obtained from the plurality of layers of storage media, and model training is performed again.

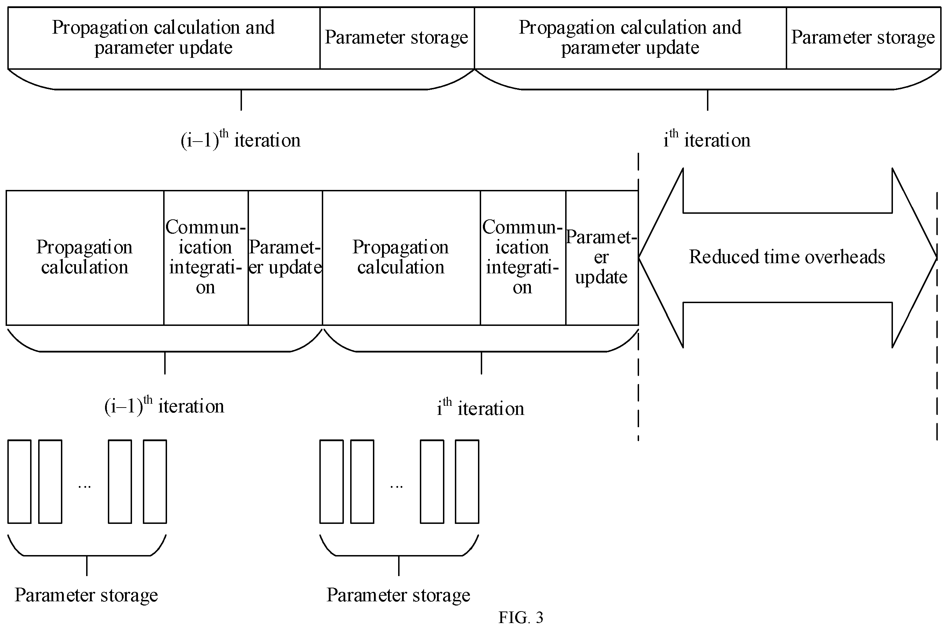

FIG. 3 shows a schematic flowchart of a method for training a deep learning model according to an embodiment of the present disclosure. As shown in FIG. 3,
currently, in the iterative training of the model, each iteration includes propagation calculation, parameter update, and parameter storage. In the (i-1)^{th} iteration, propagation calculation and parameter update are completed, and an updated model parameter is stored. The i^{th} iteration is started, propagation calculation and parameter update are also completed, and an updated model parameter is stored.

In the embodiment of FIG. 1 of the present disclosure, each iteration includes propagation calculation, communication integration, and parameter update processes. In a propagation calculation process of the (i-1)^{th} iteration, the model parameter is stored, and communication integration and parameter update processes are then performed. The i^{th} iteration is started. In a propagation calculation process of the i^{th} iteration, the model parameter is stored, and then the communication integration and parameter update processes are then performed.

The comparison between the two procedures shows that time overhead is reduced, and efficiency of model training is improved.

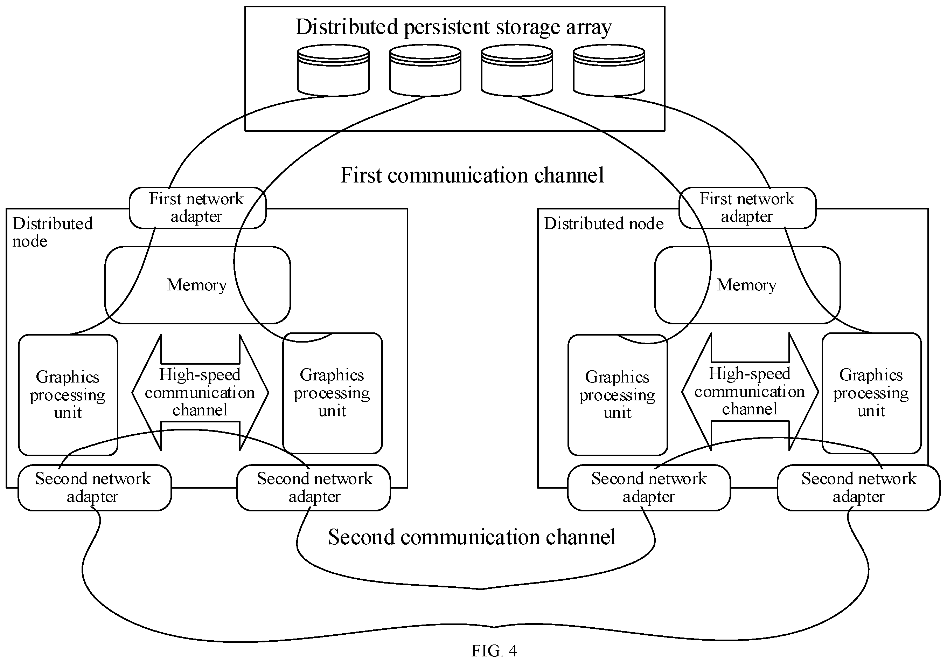

FIG. 4 shows a principle diagram of a method for training a deep learning model according to an embodiment of the present disclosure. As shown in FIG. 4,
the system includes a plurality of distributed nodes (two distributed nodes are shown in FIG. 4) and a storage medium (a distributed persistent storage array is shown in FIG. 4). Any one of the distributed nodes includes a memory, a plurality of graphics processing units, a first network adapter, and a second network adapter. A high-speed communication channel is established between the graphics processing units of the distributed node, a first communication channel is established between the first network adapter of the distributed node and a distributed storage node, and a second communication channel is established between the second network adapters of the distributed nodes.

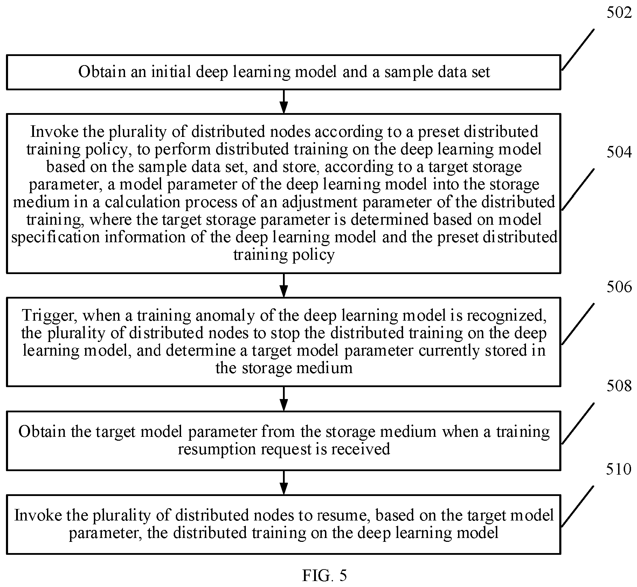

Refer to FIG. 5. FIG. 5 shows a flowchart of another method for training a deep learning model according to an embodiment of the present disclosure, where the method is applied to a cloud-side device. The cloud-side device includes a plurality of distributed nodes and a storage medium. The method includes the following specific steps.

Step 502: Obtain an initial deep learning model and a sample data set.

Step 504: Invoke the plurality of distributed nodes according to a preset distributed training policy, to perform distributed training on the deep learning model based on the sample data set, and store, according to a target storage parameter, a model parameter of the deep learning model into the storage medium in a calculation process of an adjustment parameter of the distributed training, where the target storage parameter is determined based on model specification information of the deep learning model and the preset distributed training policy.

Step 506: Trigger, when a training anomaly of the deep learning model is recognized, the plurality of distributed nodes to stop the distributed training on the deep learning model, and determine a target model parameter currently stored in the storage medium.

Step 508: Obtain the target model parameter from the storage medium when a training resumption request is received.

Step 510: Invoke the plurality of distributed nodes to resume, based on the target model parameter, the distributed training on the deep learning model.

This embodiment of the present disclosure is applied to a cloud-side device having a distributed training function. The cloud-side device is a network cloud device, which is a virtual device and includes a plurality of distributed nodes and a storage medium. Any one of the distributed nodes includes computing hardware for model training, for example, a GPU, an NPU, an FPGA, an ASIC, or a CPU.

This embodiment of the present disclosure has the same inventive concept with the embodiment of the specification of FIG. 1. Specific manners of steps 502, 504, 508, and 510 are described in detail in the embodiment of the specification of FIG. 1, and details are not described herein again.

For example, on a website of a large language model, a virtual character dialog function currently needs to be added. An initial large language model is trained, so that a target large language model obtained through training has a text question-answering function, and can execute a text question-answering task. The initial large language model is obtained from a model repository, and a sample text set is obtained from an open source sample database. The sample text set includes 10000000 sample question-answering text pairs. The preset distributed training policy is a data parallel policy. Time overhead analysis is performed in advance based on the number of model parameters of the large language model being at a level of 10¹³ and the data parallel policy, to determine time overhead t1 of a forward propagation calculation process and time overhead t2 of a backward propagation calculation process of one iteration, and target storage model parameter specifications P1 and P2 are obtained based on the time overhead and the number of model parameters. The 10000000 sample question-answering text pairs in the sample text set are divided according to the data parallel policy. 64 pieces of distributed data are constructed, the 64 pieces of distributed data are distributed to 64 distributed nodes, a GPU is deployed on each distributed node, any piece of distributed data is divided into 16 mini-batches on any one of the distributed nodes, and iterative training is performed on the 16 mini-batches by using the GPU. In a forward propagation calculation process and a backward propagation calculation process of each iterative training, according to the target storage model parameter specifications P1 and P2, a model parameter θ of the large language model is sequentially stored in a GPU cache, a memory, and a hard disk of the distributed node. When a training anomaly of the large language model is recognized, the 64 distributed nodes are triggered to stop distributed training on the large language model, and a currently stored target model parameter θ in the hard disk is determined. When a training resumption request is received, the stored target model parameter θ is obtained from the hard disk. Based on the target model parameter θ, distributed training on the large language model is resumed, to obtain a trained target large language model. The target large language model has a text question-answering function. The target large language model is deployed on a cloud-side device of the website of the large language model, to provide a virtual character dialog function for a user.

In an embodiment of the present disclosure, an initial deep learning model and a sample data set are obtained; and the plurality of distributed nodes are invoked according to a preset distributed training policy, to perform distributed training on the deep learning model based on the sample data set, and according to a target storage parameter, a model parameter of the deep learning model is stored into the storage medium in a calculation process of an adjustment parameter of the distributed training, where the target storage parameter is determined based on model specification information of the deep learning model and the preset distributed training policy; when a training anomaly of the deep learning model is recognized, the plurality of distributed nodes are triggered to stop the distributed training on the deep learning model, and a target model parameter currently stored in the storage medium is determined; the target model parameter is obtained from the storage medium when a training resumption request is received; and the plurality of distributed nodes are invoked, to resume, based on the target model parameter, the distributed training on the deep learning model. The target storage parameter is determined based on the model specification information of the deep learning model and the preset distributed training policy. An iteration rule of the distributed training is fully considered. In the calculation process of the adjustment parameter of the distributed training, the model parameter of the deep learning model is stored into the storage medium according to the target storage parameter. A model parameter storage process is overlapped with the calculation process of the adjustment parameter in the distributed training, thereby fully reducing performance overhead. The deep learning model parameter is stored in real time in a manner of near zero performance overhead, so that deep learning model training is highly efficient while having a high fault tolerance capability. When the training anomaly of the deep learning model is recognized, the stored target model parameter is obtained from the storage medium, and distributed training on the deep learning model is resumed, so that fault tolerance of deep learning model training is improved, re-training the deep learning model is avoided, training efficiency is ensured while there is stability, and training costs is reduced.

In an optional embodiment of the present disclosure, the storage medium includes a plurality of storage media with different storage performance.

The storing, according to a target storage parameter, a model parameter of the deep learning model into the storage medium in a calculation process of an adjustment parameter of the distributed training in step 504 includes the following specific step:
storing the model parameter of the deep learning model into the plurality of storage media according to the target storage parameter and storage performance priorities of the plurality of storage media.

Correspondingly, the obtaining the target model parameter from the storage medium in step 508 includes the following specific steps:
obtaining the target model parameter from a first storage medium; and
obtaining, if the target model parameter is not obtained, the target model parameter from a second storage medium, where a storage performance priority of the first storage medium is higher than a storage performance priority of the second storage medium.

The step of storing the model parameter of the deep learning model into the plurality of storage media according to the target storage parameter and storage performance priorities of the plurality of storage media is described in detail in the embodiment of the specification of FIG. 1, and details are not described herein again.

Considering that the storage performance priority of the first storage medium is higher than the storage performance priority of the second storage medium, using FIG. 2 as an example, the first storage medium is a memory, and the second storage medium is a hard disk. A read/write speed of the memory is higher than a read/write speed of the hard disk. If the target model parameter can be obtained, training efficiency of the memory is higher than training efficiency of the hard disk. However, the target model parameter is non-persistently stored in the memory. Consequently, the target model parameter possibly cannot be obtained, and needs to be obtained from the hard disk.

For example, the stored target model parameter θ is obtained from the memory, and if the target model parameter is not obtained, the target model parameter θ is obtained from the hard disk.

The target model parameter is obtained from the first storage medium; and if the target model parameter is not obtained, the target model parameter is obtained from the second storage medium, where the storage performance priority of the first storage medium is higher than the storage performance priority of the second storage medium. A difference between storage performance priorities of the storage media is fully utilized. When a training anomaly occurs, the target model parameter is preferentially obtained from a storage medium with a high storage performance priority, and it is ensured that the target model parameter is persistently stored in the storage medium with a high storage performance priority, thereby improving model training efficiency while ensuring reliability of model training.

In an optional embodiment of the present disclosure, the cloud-side device further includes first communication channels connected to the distributed nodes, and a second communication channel connected to the storage medium.

The invoking the plurality of distributed nodes according to the preset distributed training policy, to perform the distributed training on the deep learning model based on the sample data set in step 504 includes the following specific step:
invoking the plurality of distributed nodes through the first communication channels according to the preset distributed training policy, to perform the distributed training on the deep learning model based on the sample data set.

Correspondingly, the storing, according to the target storage parameter, the model parameter of the deep learning model into the storage medium in step 504 includes the following specific step:
storing, according to the target storage parameter, the model parameter of the deep learning model into the storage medium through the second communication channel.

The second communication channel connected to the storage medium is a communication channel used in a model parameter storage process, and includes a physical channel and a logical channel between the distributed node and the storage medium, for example, a read/write channel (a data bus) between a network adapter, a PCIe topology, an optical fiber, a distributed node, and a storage medium.

The first communication channel connected to another distributed node is a communication channel used in a communication process, and includes a physical channel and a logical channel between the distributed node and the storage medium, for example, a high-speed channel between a network adapter, a PCIe topology, an optical fiber, a distributed node, and a GPU, and a high-speed channel between distributed nodes. The first communication channel may be implemented by using an RDMA technology, thereby improving a transmission speed.

For example, the second communication channel is a physical channel between the network adapters on the 64 distributed nodes and a distributed persistent storage array respectively. According to a target storage model parameter specification P, the model parameter θ of the large language model is stored in the distributed persistent storage array through the second communication channel. The first communication channel is a physical channel between the network adapters on the 64 distributed nodes, and a logical channel between a PCIe topology on the distributed nodes into which a GPU is inserted, a high-speed channel between GPUs, and a high-speed channel between distributed nodes. The gradient values $\frac{dL}{dX}$ on the distributed nodes are integrated by using the RDMA technology through the first communication channel, and the model parameter θ of the large language model is updated by using the gradient update method based on the gradient values of the distributed node.

The plurality of distributed nodes are invoked through the first communication channels according to the preset distributed training policy, to perform the distributed training on the deep learning model based on the sample data set. According to the target storage parameter, the model parameter of the deep learning model is stored into the storage medium through the second communication channel. The two data transmission processes, that is, the model parameter storage process and the communication process, are separated, to avoid introducing additional collective communication, and ensure that the distributed training is not interfered with. This improves reliability of the distributed training and improves the effect of model training.

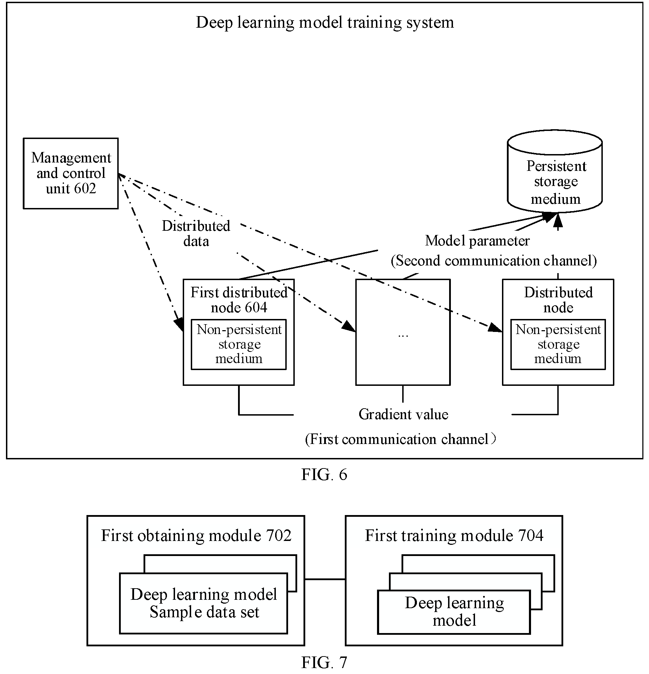

Corresponding to the foregoing method embodiments, the present disclosure further provides an embodiment of a system for training a deep learning model. FIG. 6 shows a schematic structural diagram of a system for training a deep learning model according to an embodiment of the present disclosure. As shown in FIG. 6, the system includes a management and control unit 602 and a plurality of distributed nodes, where the plurality of distributed nodes includes a first distributed node 604, and the first distributed node 604 is any one of the plurality of distributed nodes;
the management and control unit 602 is configured to: obtain an initial deep learning model and a sample data set, construct, according to a preset distributed training policy, a plurality of pieces of distributed data based on the deep learning model and the sample data set, and distribute the plurality of pieces of distributed data to the distributed nodes; and
the first distributed node 604 is configured to perform distributed training on the deep learning model based on the sample data set; and store, according to a target storage parameter, a model parameter of the deep learning model in a calculation process of an adjustment parameter of the distributed training, where the target storage parameter is determined based on model specification information of the deep learning model and the preset distributed training policy.

Optionally, the system further includes a persistent storage medium, and the first distributed node 604 includes a non-persistent storage medium.

Correspondingly, the first distributed node 604 is further configured to: store, according to the target storage parameter, the model parameter of the deep learning model into the non-persistent storage medium in the calculation process of the adjustment parameter of the distributed training, to transfer the model parameter of the deep learning model from the non-persistent storage medium to the persistent storage medium.

Optionally, the adjustment parameter is a gradient value, and adjustment parameter calculation is propagation calculation. The first distributed node 604 further includes first communication channels connected to the distributed nodes, and a second communication channel connected to the storage medium.

Correspondingly, the first distributed node 604 is further configured to integrate gradient values on the distributed nodes through the first communication channel.

Correspondingly, the first distributed node 604 is further configured to send the model parameter of the deep learning model from the non-persistent storage medium to the persistent storage medium through the second communication channel for storage.

In this embodiment of the present disclosure, the target storage parameter is determined based on the model specification information of the deep learning model and the preset distributed training policy. An iteration rule of the distributed training is fully considered. In the calculation process of the adjustment parameter of the distributed training, the model parameter of the deep learning model is stored according to the target storage parameter. A model parameter storage process is overlapped with the calculation process of the adjustment parameter in the distributed training, thereby fully reducing performance overhead. The deep learning model parameter is stored in real time in a manner of near zero performance overhead, so that deep learning model training is highly efficient while having a high fault tolerance capability.

The above is an exemplary solution of a system for training a deep learning model of this embodiment. It should be noted that the technical solution of the system for training a deep learning model has the same concept as the technical solution of the foregoing method for training a deep learning model. For details that are not described in detail in the technical solution of the system for training a deep learning model, refer to the descriptions of the technical solution of the foregoing method for training a deep learning model.

Corresponding to the foregoing method embodiments, the present disclosure further provides an embodiment of an apparatus for training a deep learning model. FIG. 7 shows a schematic structural diagram of an apparatus for training a deep learning model according to an embodiment of the present disclosure. As shown in FIG. 7, the apparatus includes:
a first obtaining module 702, configured to obtain an initial deep learning model and a sample data set; and
a first training module 704, configured to: perform, according to a preset distributed training policy, distributed training on the deep learning model based on the sample data set, and store, according to a target storage parameter, a model parameter of the deep learning model in a calculation process of an adjustment parameter of the distributed training, where the target storage parameter is determined based on model specification information of the deep learning model and the preset distributed training policy.

Optionally, the first training module 704 is further configured to:
construct, according to the preset distributed training policy, a plurality of pieces of distributed data based on the deep learning model and the sample data set, where the preset distributed training policy includes a model parallel training policy or a data parallel training policy; distribute the plurality of pieces of distributed data to distributed nodes; perform, on a first distributed node, propagation calculation based on the distributed data, to obtain the gradient value, where the first distributed node is any one of a plurality of distributed nodes; and update the model parameter of the deep learning model based on the gradient values on the distributed nodes, and obtain a trained deep learning model when a preset training ending condition is satisfied.

Optionally, the distributed data includes a plurality of batches of distributed data; and
the first training module 704 is further configured to:
perform, on the first distributed node, propagation calculation based on a current batch of distributed data, to obtain the gradient value.

Correspondingly, the apparatus further includes:
an iteration module, configured to update the current batch of distributed data, and re-execute the step of performing, on the first distributed node, propagation calculation based on the current batch of distributed data, to obtain the gradient value.

Optionally, the apparatus further includes:
a storage parameter determining module, configured to predict, for the batches of distributed data, the number of times and time overhead of the propagation calculation based on the model specification information of the deep learning model and the preset distributed training policy; and determine the target storage parameter corresponding to the propagation calculation process based on the number of times and the time overhead of the propagation calculation.

Optionally, the apparatus further includes:
a gradient value integration module, configured to integrate the gradient values on the distributed nodes through communication channels between the distributed nodes.

Optionally, any one of the distributed nodes includes a first communication channel connected to a storage medium and a second communication channel connected to another distributed node; and
the first training module 704 is further configured to:
store the model parameter of the deep learning model into the storage medium through the first communication channel according to the target storage parameter.

Correspondingly, the gradient value integration module is further configured to:
integrate the gradient values on the distributed nodes through the second communication channels.

Optionally, the propagation calculation includes forward propagation calculation and backward propagation calculation.

The apparatus further includes:
a forward and back storage parameter determining module, configured to determine a first target storage parameter corresponding to a forward propagation calculation process and a second target storage parameter corresponding to a backward propagation calculation process based on the model specification information of the deep learning model and the preset distributed training policy.

Correspondingly, the first training module 704 is further configured to:
store, according to the first target storage parameter, the model parameter of the deep learning model in the forward propagation calculation process; and store, according to the second target storage parameter, the model parameter of the deep learning model in the backward propagation calculation process.

Optionally, the apparatus further includes:
a training resuming module, configured to: obtain a stored target model parameter when a training resumption request is received, where the training resumption request is generated after a training anomaly of the distributed training is determined to be recovered, and the target model parameter is a model parameter stored before the training anomaly occurs; and resume distributed training on the deep learning model based on the target model parameter.

In this embodiment of the present disclosure, the target storage parameter is determined based on the model specification information of the deep learning model and the preset distributed training policy. An iteration rule of distributed training is fully considered. In the propagation calculation process of the distributed training, the model parameter of the deep learning model is stored according to the target storage parameter. A model parameter storage process is overlapped with the propagation calculation process in the distributed training, thereby fully reducing performance overhead. The deep learning model parameter is stored in real time in a manner of near zero performance overhead, so that deep learning model training is highly efficient while having a high fault tolerance capability.

The above is an exemplary solution of an apparatus for training a deep learning model of this embodiment. It should be noted that the technical solution of the apparatus for training a deep learning model has the same concept as the technical solution of the foregoing method for training a deep learning model. For details that are not described in detail in the technical solution of the apparatus for training a deep learning model, refer to the descriptions of the technical solution of the foregoing method for training a deep learning model.

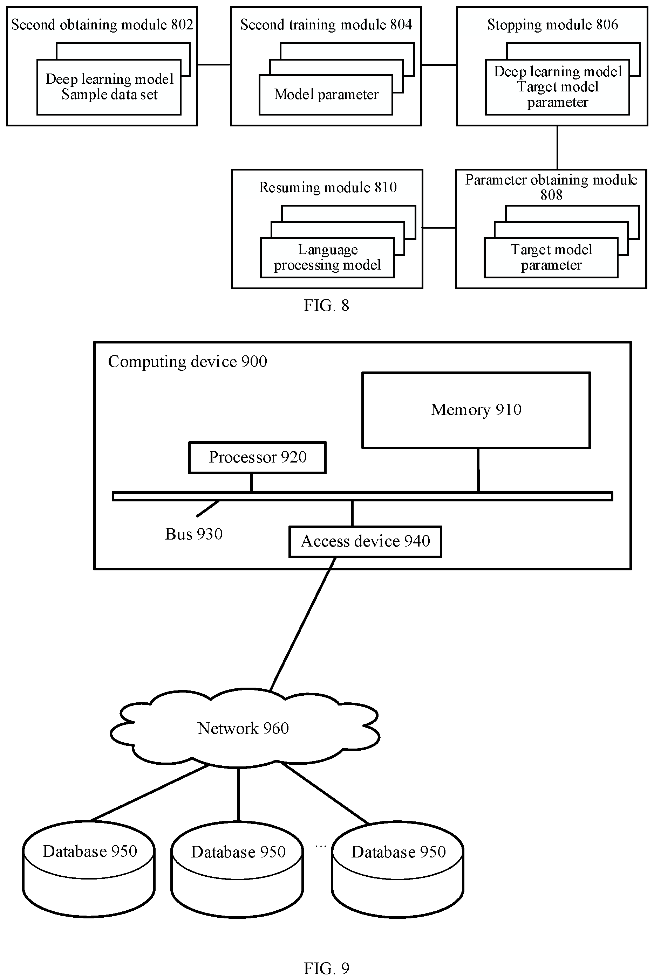

Corresponding to the foregoing method embodiments, the present disclosure further provides an embodiment of an apparatus for training a deep learning model. FIG. 8 shows a schematic structural diagram of another apparatus for training a deep learning model according to an embodiment of the present disclosure. As shown in FIG. 8, the apparatus is used in a cloud-side device. The cloud-side device includes a plurality of distributed nodes and a storage medium. The apparatus includes:
a second obtaining module 802, configured to obtain an initial deep learning model and a sample data set;
a second training module 804, configured to: invoke the plurality of distributed nodes according to a preset distributed training policy, to perform distributed training on the deep learning model based on the sample data set, and store, according to a target storage parameter, a model parameter of the deep learning model into the storage medium in a calculation process of an adjustment parameter of the distributed training, where the target storage parameter is determined based on model specification information of the deep learning model and the preset distributed training policy;
a stopping module 806, configured to: trigger, when a training anomaly of the deep learning model is recognized, the plurality of distributed nodes to stop the distributed training on the deep learning model, and determine a target model parameter currently stored in the storage medium;
a parameter obtaining module 808, configured to obtain the target model parameter from the storage medium when a training resumption request is received; and
a resuming module 810, configured to: invoke the plurality of distributed nodes to resume, based on the target model parameter, the distributed training on the deep learning model.

Optionally, the storage medium includes a plurality of storage media with different storage performance.

The second training module 804 is further configured to:
store the model parameter of the deep learning model into the plurality of storage media according to the target storage parameter and storage performance priorities of the plurality of storage media.

Correspondingly, the parameter obtaining module 808 is further configured to:
obtain the target model parameter from a first storage medium; and obtain, if the target model parameter is not obtained, the target model parameter from a second storage medium, where a storage performance priority of the first storage medium is higher than a storage performance priority of the second storage medium.

Optionally, the cloud-side device further includes first communication channels connected to distributed nodes, and a second communication channel connected to the storage medium.

The second training module 804 is further configured to:
invoke the plurality of distributed nodes through the first communication channels according to the preset distributed training policy, to perform the distributed training on the deep learning model based on the sample data set; and store, according to the target storage parameter, the model parameter of the deep learning model into the storage medium through the second communication channel.

In this embodiment of the present disclosure, the target storage parameter is determined based on the model specification information of the deep learning model and the preset distributed training policy. An iteration rule of the distributed training is fully considered. In the calculation process of the adjustment parameter of the distributed training, the model parameter of the deep learning model is stored into the storage medium according to the target storage parameter. A model parameter storage process is overlapped with the calculation process of the adjustment parameter in the distributed training, thereby fully reducing performance overhead. The deep learning model parameter is stored in real time in a manner of near zero performance overhead, so that deep learning model training is highly efficient while having a high fault tolerance capability. When the training anomaly of the deep learning model is recognized, the stored target model parameter is obtained from the storage medium, and distributed training on the deep learning model is resumed, so that fault tolerance of deep learning model training is improved, re-training the deep learning model is avoided, training efficiency is ensured while there is stability, and training costs is reduced.

The above is an exemplary solution of an apparatus for training a deep learning model of this embodiment. It should be noted that the technical solution of the apparatus for training a deep learning model has the same concept as the technical solution of the foregoing method for training a deep learning model. For details that are not described in detail in the technical solution of the apparatus for training a deep learning model, refer to the descriptions of the technical solution of the foregoing method for training a deep learning model.

FIG. 9 shows a block diagram of a structure of a computing device according to an embodiment of the present disclosure. Components of a computing device 900 includes, but are not limited to, a memory 910 and a processor 920. The processor 920 and the memory 910 are connected through a bus 930. A database 950 is configured to store data.

The computing device 900 further includes an access device 940. The access device 940 enables the computing device 900 to perform communication through one or more networks 960. Examples of the networks include a combination of a public switched telephone network (Public Switched Telephone Network, PSTN for short), a local area network (LAN, Local Area Network), a wide area network (Wide Area Network, WAN for short), a personal area network (Personal Area Network, PAN for short), or a communication network such as the Internet. The access device 940 may include one or more wired or wireless network interfaces (for example, a network interface controller (network interface controller, NIC for short)), such as an IEEE 802.11 wireless local area network (Wireless Local Area Network, WLAN for short) wireless interface, a worldwide interoperability for microwave access (Worldwide Interoperability for Microwave Access, Wi-MAX for short) interface, an Ethernet interface, a universal serial bus (Universal Serial Bus, USB for short) interface, a cellular network interface, a Bluetooth interface, and a near field communication (Near Field Communication, NFC for short).

In an embodiment of the present disclosure, the foregoing components of the computing device 900 and other components not shown in FIG. 9 may also be connected to each other, for example, by using a bus. It should be understood that the block diagram of the structure of the computing device shown in FIG. 9 is merely for the purpose of illustration, and is not intended to limit the scope of the present disclosure. A person skilled in the art may add or replace the other components as needed.

The computing device 900 may be any type of static or mobile computing device, including a mobile computer or a mobile computing device (for example, a tablet computer, a personal digital assistant, a laptop computer, a notebook computer, or a netbook), a mobile phone (for example, a smartphone), a wearable computing device (for example, a smart watch or smart glasses) or other types of mobile devices, or a static computing device such as a desktop computer or a personal computer (Personal Computer, PC for short). The computing device 900 may alternatively be a mobile or static server.

The processor 920 is configured to execute the following computer-executable instructions. The computer-executable instructions, when executed by the processor, implement the steps of the foregoing method for training a deep learning model.

The above is an exemplary solution of a computing device of this embodiment. It should be noted that the technical solution of the computing device has the same concept as the technical solution of the foregoing method for training a deep learning model. For details that are not described in detail in the technical solution of the computing device, refer to the descriptions of the technical solution of the foregoing method for training a deep learning model.

An embodiment of the present disclosure further provides a computer-readable storage medium, having computer-executable instructions stored therein. The computer-executable instructions, when executed by a processor, implements the steps of the foregoing method for training a deep learning model.

The above is an exemplary solution of the computer-readable storage medium of this embodiment. It should be noted that the technical solution of the storage medium has the same concept as the technical solution of the foregoing method for training a deep learning model. For details that are not described in detail in the technical solution of the storage medium, refer to the descriptions of the technical solution of the foregoing method for training a deep learning model.

An embodiment of the present disclosure further provides a computer program, where the computer program, when executed by a computer, causes the computer to perform the steps of the foregoing method for training a deep learning model.

The above is an exemplary solution of the computer program of this embodiment. It should be noted that the technical solution of the computer program has the same concept as the technical solution of the foregoing method for training a deep learning model. For details that are not described in detail in the technical solution of the computer program, refer to the descriptions of the technical solution of the foregoing method for training a deep learning model.

Specific embodiments of the present disclosure are described above. Other embodiments fall within the scope of the appended claims. In some cases, actions or steps recorded in the claims may be performed in sequences different from those in the embodiments and an expected result may still be achieved. In addition, the processes depicted in the drawings are not necessarily performed in the shown specific order or successively to achieve an expected result. In some implementations, multitasking and parallel processing may be feasible or beneficial.

The computer instructions include a computer program code. The computer program code may be in a source code form, an object code form, an executable file form, some intermediate forms, or the like. A computer-readable medium may include: any entity or apparatus that is capable of carrying the computer program code, a recording medium, a USB flash drive, a removable hard disk, a magnetic disk, an optical disc, a computer storage device, a read-only memory (Read-Only Memory, ROM for short), a random access memory (Random Access Memory, RAM for short), an electric carrier signal, a telecommunication signal, a software distribution medium, and the like. It should be noted that the content included in the computer-readable medium may be appropriately increased or decreased according to the requirements of patent practice. For example, in some regions, according to patent practice, the computer-readable medium does not include an electric carrier signal and a telecommunication signal.

It should be noted that for simplicity of description, the foregoing method embodiments are expressed as a series of action combinations, but a person skilled in the art should be aware that the embodiments of the present disclosure are not limited by the described action sequence, the reason is that according to the embodiments of the present disclosure, some steps may be performed in other sequences or simultaneously. A person skilled in the art should also be aware that the embodiments described in the specification are preferred embodiments, and the actions and the modules involved are not necessary for the embodiments of the present disclosure.

In the foregoing embodiments, the descriptions of the embodiments have respective emphasis. For a part that is not described in detail in an embodiment, reference may be made to the related descriptions of other embodiments.

The preferred embodiments of the present disclosure disclosed above are only used to assist in elaboration of the present disclosure. Optional embodiments do not provide an exhaustive description of all details and do not limit the present invention to only the specific implementations described. Apparently, many modifications and changes may be made according to content of the embodiments of the present disclosure. These embodiments are selected and specifically described in the present disclosure to better explain the principles and practical applications of the embodiments of the present disclosure, so that a person skilled in the art can better understand and make good use of the present disclosure. The present disclosure is limited by only the claims along with the full scope and equivalents thereof.

## Claims

1. A method for training a deep learning model, comprising:
obtaining an initial deep learning model and a sample data set;
performing, according to a preset distributed training policy, distributed training on the deep learning model based on the sample data set, and storing, according to a target storage parameter, a model parameter of the deep learning model in a calculation process of an adjustment parameter of the distributed training, wherein the target storage parameter is determined based on model specification information of the deep learning model and the preset distributed training policy.

2. The method according to claim 1, wherein the adjustment parameter is a gradient value, and adjustment parameter calculation is propagation calculation;
the performing, according to the preset distributed training policy, the distributed training on the deep learning model based on the sample data set comprises:
constructing, according to the preset distributed training policy, a plurality of pieces of distributed data based on the deep learning model and the sample data set, wherein the preset distributed training policy comprises a model parallel training policy or a data parallel training policy;
distributing the plurality of pieces of distributed data to distributed nodes;
performing, on a first distributed node, propagation calculation based on the distributed data, to obtain the gradient value, wherein the first distributed node is any one of a plurality of distributed nodes;
updating the model parameter of the deep learning model based on the gradient values on the distributed nodes, and obtaining a trained deep learning model when a preset training ending condition is satisfied.

3. The method according to claim 2, wherein the distributed data comprises a plurality of batches of distributed data;
the performing, on the first distributed node, the propagation calculation based on the distributed data, to obtain the gradient value, comprises:
performing, on the first distributed node, propagation calculation based on a current batch of distributed data, to obtain the gradient value;
after updating the model parameter of the deep learning model based on the gradient values on the distributed nodes, the method further comprises:
updating the current batch of distributed data, and re-executing the step of performing, on the first distributed node, calculation based on the current batch of distributed data, to obtain the gradient value.

4. The method according to claim 3, wherein before performing, on the first distributed node, the calculation based on the current batch of distributed data, to obtain the gradient value, the method further comprises:
predicting, for the batches of distributed data, the number of times and time overhead of calculation based on the model specification information of the deep learning model and the preset distributed training policy;
determining the target storage parameter corresponding to the calculation process based on the number of times and the time overhead of the calculation.

5. The method according to claim 2, wherein before updating the model parameter of the deep learning model based on the gradient values on the distributed nodes, the method further comprises:
integrating the gradient values on the distributed nodes through communication channels between the distributed nodes.

6. The method according to claim 5, wherein any one of the distributed nodes comprises a first communication channel connected to a storage medium and a second communication channel connected to another distributed node;
the storing the model parameter of the deep learning model according to the target storage parameter comprises:
storing the model parameter of the deep learning model into the storage medium through the first communication channel according to the target storage parameter;
the integrating the gradient values on the distributed nodes through communication channels between the distributed nodes comprises:
integrating the gradient values on the distributed nodes through the second communication channels.

7. The method according to any one of claims 1 to 6, wherein the propagation calculation comprises forward propagation calculation and backward propagation calculation;
before storing, according to the target storage parameter, the model parameter of the deep learning model in the calculation process of the distributed training, the method further comprises:
determining a first target storage parameter corresponding to a forward propagation calculation process and a second target storage parameter corresponding to a backward propagation calculation process based on the model specification information of the deep learning model and the preset distributed training policy;
the storing, according to the target storage parameter, the model parameter of the deep learning model in the calculation process of the distributed training comprises:
storing, according to the first target storage parameter, the model parameter of the deep learning model in the forward propagation calculation process;
storing, according to the second target storage parameter, the model parameter of the deep learning model in the backward propagation calculation process.

8. The method according to any one of claims 1 to 7, further comprising:
obtaining a stored target model parameter when a training resumption request is received, wherein the training resumption request is generated after a training anomaly of the distributed training is determined to be recovered, and the target model parameter is a model parameter stored before the training anomaly occurs;
resuming distributed training on the deep learning model based on the target model parameter.

9. A method for training a deep learning model, applied to a cloud-side device, wherein the cloud-side device comprises a plurality of distributed nodes and a storage medium; and the method comprises:
obtaining an initial deep learning model and a sample data set;
invoking the plurality of distributed nodes according to a preset distributed training policy, to perform distributed training on the deep learning model based on the sample data set, and storing, according to a target storage parameter, a model parameter of the deep learning model into the storage medium in a calculation process of an adjustment parameter of the distributed training, wherein the target storage parameter is determined based on model specification information of the deep learning model and the preset distributed training policy;
triggering, when a training anomaly of the deep learning model is recognized, the plurality of distributed nodes to stop the distributed training on the deep learning model, and determining a target model parameter currently stored in the storage medium;
obtaining the target model parameter from the storage medium when a training resumption request is received;
invoking the plurality of distributed nodes to resume, based on the target model parameter, the distributed training on the deep learning model.

10. The method according to claim 9, wherein the storage medium comprises a plurality of storage media with different storage performance;
the storing, according to a target storage parameter, a model parameter of the deep learning model into the storage medium in a calculation process of the distributed training comprises:
storing the model parameter of the deep learning model into the plurality of storage media according to the target storage parameter and storage performance priorities of the plurality of storage media;
the obtaining the target model parameter from the storage medium comprises:
obtaining the target model parameter from a first storage medium;
obtaining, if the target model parameter is not obtained, the target model parameter from a second storage medium, wherein a storage performance priority of the first storage medium is higher than a storage performance priority of the second storage medium.

11. The method according to claim 9, wherein the cloud-side device further comprises first communication channels connected to distributed nodes, and a second communication channel connected to the storage medium;
the invoking the plurality of distributed nodes according to the preset distributed training policy, to perform the distributed training on the deep learning model based on the sample data set, comprises:
invoking the plurality of distributed nodes through the first communication channels according to the preset distributed training policy, to perform the distributed training on the deep learning model based on the sample data set;
the storing, according to the target storage parameter, the model parameter of the deep learning model into the storage medium comprises:
storing, according to the target storage parameter, the model parameter of the deep learning model into the storage medium through the second communication channel.

12. A system for training a deep learning model, comprising a management and control unit and a plurality of distributed nodes, wherein the plurality of distributed nodes comprises a first distributed node, and the first distributed node is any one of the plurality of distributed nodes;
the management and control unit is configured to: obtain an initial deep learning model and a sample data set, construct, according to a preset distributed training policy, a plurality of pieces of distributed data based on the deep learning model and the sample data set, and distribute the plurality of pieces of distributed data to the distributed nodes;
the first distributed node is configured to perform distributed training on the deep learning model based on the sample data set; and store, according to a target storage parameter, a model parameter of the deep learning model in a calculation process of an adjustment parameter of the distributed training, wherein the target storage parameter is determined based on model specification information of the deep learning model and the preset distributed training policy.

13. The system according to claim 12, further comprising a persistent storage medium, wherein the first distributed node comprises a non-persistent storage medium;
the first distributed node is further configured to: store, according to the target storage parameter, the model parameter of the deep learning model into the non-persistent storage medium in the calculation process of the adjustment parameter of the distributed training, to transfer the model parameter of the deep learning model from the non-persistent storage medium to the persistent storage medium.

14. The system according to claim 13, wherein the adjustment parameter is a gradient value, and adjustment parameter calculation is propagation calculation;
the first distributed node further comprises first communication channels connected to the distributed nodes, and a second communication channel connected to the storage medium;
the first distributed node is further configured to integrate gradient values on the distributed nodes through the first communication channels;
the first distributed node is further configured to send the model parameter of the deep learning model from the non-persistent storage medium to the persistent storage medium through the second communication channel for storage.

15. A computing device, comprising:
a memory and a processor,
wherein the memory is configured to store computer-executable instructions, and the processor is configured to execute the computer-executable instructions which, when executed by the processor, implement steps of the method according to any one of claims 1 to 11.

16. A computer-readable storage medium, storing computer-executable instructions, wherein the computer-executable instructions, when executed by a processor, implement steps of the method according to any one of claims 1 to 11.

17. A computer program, wherein the computer program, when executed by a processor, implements the method according to any one of claims 1 to 11.
